# EUROPEAN PATENT APPLICATION

(11) **EP 4 757 467 A1**
(43) Date of publication of application: **10.06.2026**
(21) Application number: 23947014.9
(22) Date of filing: 31.07.2023
(51) Int. Cl.: H04W 72/23, H04W 72/0453, H04W 72/044

(54) **COMMUNICATION PROCESSING METHOD, TERMINAL, DEVICE, COMMUNICATION SYSTEM AND STORAGE MEDIUM**

(71) Applicant: Beijing Xiaomi Mobile Software Co., Ltd., Beijing 100085 (CN)
(72) Inventor: LIU, Min, Beijing 100085 (CN); LIU, Zhengxuan, Beijing 100085 (CN)
(74) Representative: Stöckeler, Ferdinand
(86) International application number: PCT/CN2023/110273
(87) International publication number: WO 2025/025065

(57) **Abstract**

Provided in the embodiments of the present disclosure are a communication processing method, a terminal, a device, a communication system and a storage medium. The communication processing method comprises: on the basis of a first identifier, a first terminal determining a data set corresponding to the first identifier, wherein different data sets are associated with corresponding auxiliary information, the auxiliary information is configured for indicating feature information corresponding to the data sets, and the data sets are configured for prediction based on artificial intelligence (AI) or machine learning (ML). In the method of the present disclosure, the data sets in the prediction based on AI or ML can be classified by means of the first identifier, and the feature information of the data sets can be referenced, so that the characteristics or uses of the data sets are combined in the classification, thereby helping to improve the rationality and efficiency of data set collection and application.

## Description

### TECHNICAL FIELD

The present disclosure relates to the field of communication technologies, and in particular relates to a communication processing method, a terminal, a device, a communication system, and a storage medium.

### BACKGROUND

In artificial intelligence (Al)/machine learning (ML)-based predictions, such as channel status information (CSI) predictions, beam predictions, and location information predictions, various types of data are involved, and different types of data may be processed or applied in different ways.

### SUMMARY

The potential impact of data collection in AI or ML-based predictions needs to be considered.

Embodiments of the present disclosure provide a communication processing method, a terminal, a device, a communication system, and a storage medium.

In a first aspect, embodiments of the present disclosure provide a communication processing method, which includes: determining, by a first terminal, a dataset corresponding to a first identifier based on the first identifier, different datasets being associated with corresponding assistance information, where the assistance information indicates feature information corresponding to the dataset, and the dataset is used for an AI or ML-based prediction.

In the method in the present disclosure, datasets in AI or ML-based predictions may be classified using a first identifier, and the feature information of the dataset may be referenced to combine the characteristics or uses of the dataset in the classification, which is conducive to improving the rationality and efficiency of dataset collection and application.

In a second aspect, embodiments of the present disclosure provide a communication processing method, which includes: sending, by a first device, first information to a first terminal, the first information including a first dataset, and assistance information corresponding to the first dataset and/or a first identifier corresponding to the first dataset, where the first terminal is configured to determine a dataset corresponding to the first identifier based on the first identifier, different datasets are associated with corresponding assistance information, and the assistance information indicates feature information corresponding to the dataset, and the dataset is used for an AI or ML-based prediction.

In a third aspect, embodiments of the present disclosure provide a terminal, which includes: a transceiver module configured to determine a dataset corresponding to a first identifier based on the first identifier, different datasets being associated with corresponding assistance information, where the assistance information indicates feature information corresponding to the dataset, and the dataset is used for an AI or ML-based prediction.

In a fourth aspect, embodiments of the present disclosure provide a device, which includes: a transceiver module configured to send first information to a first terminal, the first information including a first dataset, and assistance information corresponding to the first dataset and/or a first identifier corresponding to the first dataset, where the first terminal is configured to determine a dataset corresponding to the first identifier based on the first identifier, different datasets are associated with corresponding assistance information, and the assistance information indicates feature information corresponding to the dataset, and the dataset is used for an AI or ML-based prediction.

In a fifth aspect, embodiments of the present disclosure provide a terminal, which includes one or more processors, where the terminal is configured to perform the method according to the first aspect.

In a sixth aspect, embodiments of the present disclosure provide a device, which includes one or more processors, where the device is configured to perform the method according to the second aspect.

In a seventh aspect, embodiments of the present disclosure provide a communication system, which includes a first terminal configured to perform the method according to the first aspect, and a first device configured to perform the method according to the second aspect.

In an eighth aspect, embodiments of the present disclosure provide a storage medium, which has stored therein instructions that, when run on a communication device, cause the communication device to perform the method according to the first aspect or the second aspect.

### BRIEF DESCRIPTION OF THE DRAWINGS

In order to more clearly illustrate the technical solutions in the embodiments of the present disclosure, the drawings required for the description of the embodiments are introduced below. The following drawings only illustrate some embodiments of the present disclosure, but do not impose specific limitations on the protection scope of the present disclosure.
FIG. 1 is an illustrative schematic diagram of the architecture of a communication system provided according to an embodiment of the present disclosure.
FIGS. 2a to 2b are schematic interactive diagrams of methods provided according to an embodiment of the present disclosure, respectively.
FIG. 2c is a schematic diagram of two types of CSIs provided according to embodiments of the present disclosure.
FIGS. 3a to 3e are schematic flowcharts of methods provided according to an embodiment of the present disclosure, respectively.
FIGS. 4a to 4e are schematic flowcharts of methods provided according to an embodiment of the present disclosure, respectively.
FIG. 5a is a schematic block diagram illustrating a terminal according to an embodiment of the present disclosure.
FIG. 5b is a schematic block diagram illustrating a first device according to an embodiment of the present disclosure.
FIG. 6a is a schematic diagram illustrating a communication device according to an embodiment of the present disclosure.
FIG. 6b is a schematic diagram illustrating a communication device according to an embodiment of the present disclosure.

### DETAILED DESCRIPTION

Embodiments of the present disclosure provide a communication processing method, a terminal, a device, a communication system, and a storage medium.

In a first aspect, embodiments of the present disclosure provide a communication processing method, which includes: determining, by a first terminal, a dataset corresponding to a first identifier based on the first identifier, different datasets being associated with corresponding assistance information, where the assistance information indicates feature information corresponding to the dataset, and the dataset is used for an AI or ML-based prediction.

In the above embodiments, datasets in AI or ML-based predictions may be classified using a first identifier, and the feature information of the dataset may be referenced to combine the characteristics or uses of the dataset in the classification, which is conducive to improving the rationality and efficiency of dataset collection and application.

In conjunction with some embodiments of the first aspect, in some embodiments, the method further includes: receiving, by the first terminal, first information sent by a first device, the first information including a first dataset, and the assistance information corresponding to the first dataset and/or the first identifier corresponding to the first dataset.

In the above embodiments, the first terminal may obtain a dataset, as well as the assistance information and/or the first identifier corresponding to the dataset, from other entities such as the first device, so as to obtain the required dataset by interactive means and to make reasonable use of the dataset based on the classification of the dataset.

In conjunction with some embodiments of the first aspect, in some embodiments, the method further includes: sending, by the first terminal, second information to a first device, the second information indicating a first identifier corresponding to a second dataset requested by the first terminal; and receiving, by the first terminal, the second dataset sent by the first device and/or the assistance information corresponding to the second dataset.

In the above embodiments, the first terminal may send the first identifier to the first device to request the dataset and/or the assistance information corresponding to the first identifier, so as to perform corresponding applications based on the obtained data.

In conjunction with some embodiments of the first aspect, in some embodiments, the method further includes: sending, by the first terminal, capability information to a first device, the capability information including assistance information corresponding to a third dataset to which a model is applicable, or a second identifier for the corresponding assistance information.

In the above embodiments, the first terminal may report the capability information, so that the first device may know the relevant capabilities of the model on the first terminal side.

In conjunction with some embodiments of the first aspect, in some embodiments, the second identifier includes at least one of: the first identifier corresponding to the third dataset, an identifier of the model, or a functionality identifier of the model, where the identifier of the model and/or the functionality identifier of the model correspond(s) to the first identifier.

In the above embodiments, the second identifier reported by the first terminal may be associated with the assistance information or the model, so that the first device may clearly know the relevant capabilities of the model on the first terminal side.

In conjunction with some embodiments of the first aspect, in some embodiments, the method further includes: receiving, by the first terminal, third information sent by the first device, the third information including a first identifier corresponding to the third dataset, the third information being used to request assistance information corresponding to the third dataset; and sending, by the first terminal, the assistance information corresponding to the third dataset to the first device.

In the above embodiments, the first terminal may send the required assistance information to the first device according to the request by the first device, so that the first device may know the required information and make reasonable use of the model.

In conjunction with some embodiments of the first aspect, in some embodiments, the first device is one of: a network device, a second terminal, or a server.

In the above embodiments, the first terminal may transmit the required dataset or assistance information based on the interaction with a network device, other terminals, or a server, so as to make reasonable use of the obtained data.

In conjunction with some embodiments of the first aspect, in some embodiments, the method further includes: receiving, by the first terminal, configuration information sent by a first device, the configuration information being used to configure the assistance information, where the first device is a network device.

In the above embodiments, the assistance information may be configured by the network device, which allows for the flexibility in defining the assistance information.

In conjunction with some embodiments of the first aspect, in some embodiments, the assistance information is predefined.

In the above embodiments, the assistance information may be predefined to be applied to the server, which may reduce the configuration operations of the network device and save wireless resources.

In conjunction with some embodiments of the first aspect, in some embodiments, the dataset includes at least one of: a channel status information (CSI) dataset, a beam identifier dataset, a reference signal received power (RSRP) dataset for beams, or a location information dataset.

In the above embodiments, in various information predictions based on the AI or ML, the first identifier may be used to classify various datasets, so that reasonable applications may be performed according to the category of the dataset in AI or ML-based predictions.

In conjunction with some embodiments of the first aspect, in some embodiments, the dataset is a CSI dataset, and the dataset is used for at least one of a model training phase, a model inference phase, and a model monitoring phase of an AI or ML-based CSI prediction.

In the above embodiments, at different stages or phases of an AI or ML-based CSI prediction, the datasets involved in different stages may be classified according to the first identifier to improve the processing and utilization efficiency of the datasets.

In conjunction with some embodiments of the first aspect, in some embodiments, the assistance information includes at least one of: a time interval between adjacent CSIs, a numeric count of CSIs, frequency domain characteristics, a moving speed, or a scenario.

In the above embodiments, the corresponding assistance information may be defined by means of different feature dimensions of the dataset, so that different features of the dataset may be fully considered in the process of classifying the dataset, thereby improving the accuracy and rationality of the classification.

In conjunction with some embodiments of the first aspect, in some embodiments, the time interval between adjacent CSIs includes at least one of: a time interval between adjacent measured CSIs in an observation window, a time interval between adjacent predicted CSIs in a prediction window, or a time interval between a first predicted CSI in a prediction window and a last measured CSI in an observation window, where the observation window is used to obtain the measured CSIs input to a model based on the AI or ML, and the prediction window is used to obtain the predicted CSIs output by the model.

In the above embodiments, an observation window and a prediction window are used in the AI or ML-based CSI prediction. The behaviors of the first terminal are different in different windows. The interval between adjacent CSIs in the dataset needs to be known, so that the first terminal may make reasonable processing or application based on the relevant features of the dataset. Specifically, by combining the CSI intervals in different observation windows, the relevant dataset may be applied to CSI predictions based on different intervals of measured CSIs; and by combining the CSI intervals in different prediction windows, the relevant dataset may be used to obtain predicted CSIs at different intervals.

In conjunction with some embodiments of the first aspect, in some embodiments, the numeric count of CSIs includes at least one of: a numeric count of the measured CSIs in the observation window, or a numeric count of the predicted CSIs in the prediction window.

In the above embodiments, the number of CSIs is beneficial for indicating the characteristics of the dataset in the corresponding window, so that the first terminal may perform reasonable processing or application based on the relevant characteristics of the dataset.

In conjunction with some embodiments of the first aspect, in some embodiments, the dataset includes one or more data; and in a case where the dataset is a CSI dataset, the data is a channel status information-reference signal (CSI-RS) or a CSI.

In the above embodiments, in an AI or ML-based CSI prediction, the relevant data may be either a CSI-RS or a CSI, so that the first terminal may train or apply a model based on a CSI or a CSI obtained by measuring the CSI-RS.

In conjunction with some embodiments of the first aspect, in some embodiments, the CSI is at least one of: channel matrix information, or channel feature vector information.

In the above embodiments, the CSI may be relevant information for feeding back a channel status, so that the network device may perform a reasonable channel assessment after receiving the prediction result from the first terminal.

In a second aspect, embodiments of the present disclosure provide a communication processing method, which includes: sending, by a first device, first information to a first terminal, the first information including a first dataset, and assistance information corresponding to the first dataset and/or a first identifier corresponding to the first dataset, where the first terminal is configured to determine a dataset corresponding to the first identifier based on the first identifier, different datasets are associated with corresponding assistance information, and the assistance information indicates feature information corresponding to the dataset, and the dataset is used for an AI or ML-based prediction.

In the above embodiments, datasets in AI or ML-based predictions may be classified using a first identifier, and the feature information of the dataset may be referenced to combine the characteristics or uses of the dataset in the classification, which is conducive to improving the rationality and efficiency of dataset collection and application.

In conjunction with some embodiments of the second aspect, in some embodiments, the method further includes: receiving, by the first device, second information sent by the first terminal, the second information indicating a first identifier corresponding to a second dataset requested by the first terminal; and sending, by the first device, the second dataset and/or the assistance information corresponding to the second dataset to the first terminal.

In conjunction with some embodiments of the second aspect, in some embodiments, the method further includes: receiving, by the first device, capability information sent by the first terminal, the capability information including assistance information corresponding to a third dataset to which a model is applicable, or a second identifier for the corresponding assistance information.

In conjunction with some embodiments of the second aspect, in some embodiments, the second identifier includes at least one of: the first identifier corresponding to the third dataset, an identifier of the model, or a functionality identifier of the model, where the identifier of the model and/or the functionality identifier of the model correspond(s) to the first identifier.

In conjunction with some embodiments of the second aspect, in some embodiments, the method further includes: sending, by the first device, third information to the first terminal, the third information including a first identifier corresponding to the third dataset, the third information being used to request assistance information corresponding to the third dataset; and receiving, by the first device, the assistance information corresponding to the third dataset sent by the first terminal.

In conjunction with some embodiments of the second aspect, in some embodiments, the first device is one of: a network device, a second terminal, or a server.

In conjunction with some embodiments of the second aspect, in some embodiments, the method further includes: sending, by the first device, configuration information to the first terminal, where the configuration information is used to configure the assistance information, and the first device is a network device.

In conjunction with some embodiments of the second aspect, in some embodiments, the dataset includes at least one of: a CSI dataset, a beam identifier dataset, an RSRP dataset for beams, or a location information dataset.

In conjunction with some embodiments of the second aspect, in some embodiments, the dataset is a CSI dataset, and the dataset is used for at least one of a model training phase, a model inference phase, or a model monitoring phase of an AI or ML-based CSI prediction.

In conjunction with some embodiments of the second aspect, in some embodiments, the assistance information includes at least one of: a time interval between adjacent CSIs, a numeric count of CSIs, frequency domain characteristics, a moving speed, or a scenario.

In conjunction with some embodiments of the second aspect, in some embodiments, the time interval between adjacent CSIs includes at least one of: a time interval between adjacent measured CSIs in an observation window, a time interval between adjacent predicted CSIs in a prediction window, or a time interval between a first predicted CSI in a prediction window and a last measured CSI in an observation window, where the observation window is used to obtain the measured CSIs input to a model based on the AI or ML, and the prediction window is used to obtain the predicted CSIs output by the model.

In conjunction with some embodiments of the second aspect, in some embodiments, the numeric count of CSIs includes at least one of: a numeric count of the measured CSIs in the observation window, or a numeric count of the predicted CSIs in the prediction window.

In conjunction with some embodiments of the second aspect, in some embodiments, the dataset includes one or more data; and in a case where the dataset is a CSI dataset, the data is a CSI-RS or a CSI.

In conjunction with some embodiments of the second aspect, in some embodiments, the CSI is at least one of: channel matrix information, or channel feature vector information.

In a third aspect, embodiments of the present disclosure provide a terminal, which includes: a transceiver module configured to determine a dataset corresponding to a first identifier based on the first identifier, different datasets being associated with corresponding assistance information, where the assistance information indicates feature information corresponding to the dataset, and the dataset is used for an AI or ML-based prediction.

In a fourth aspect, embodiments of the present disclosure provide a device, which includes: a transceiver module configured to send first information to a first terminal, the first information including a first dataset, and assistance information corresponding to the first dataset and/or a first identifier corresponding to the first dataset, where the first terminal is configured to determine a dataset corresponding to the first identifier based on the first identifier, different datasets are associated with corresponding assistance information, and the assistance information indicates feature information corresponding to the dataset, and the dataset is used for an AI or ML-based prediction.

In a fifth aspect, embodiments of the present disclosure provide a terminal, which includes one or more processors, where the terminal is configured to perform the method according to the first aspect.

In a sixth aspect, embodiments of the present disclosure provide a device, which includes one or more processors, where the device is configured to perform the method according to the second aspect.

In a seventh aspect, embodiments of the present disclosure provide a communication system, which includes a first terminal configured to perform the method according to the first aspect, and a first device configured to perform the method according to the second aspect.

In an eighth aspect, embodiments of the present disclosure provide a storage medium, which has stored therein instructions that, when run on a communication device, cause the communication device to perform the method according to the first aspect or the second aspect.

In a ninth aspect, embodiments of the present disclosure provide a program product that, when executed by a communication device, causes the communication device to perform the methods described in an optional implementation of the first aspect and an optional implementation of the second aspect.

In a tenth aspect, embodiments of the present disclosure provide a computer program that, when run on a computer, causes the computer to perform the methods described in an optional implementation of the first aspect and an optional implementation of the second aspect.

In an eleventh aspect, embodiments of the present disclosure provide a chip or chip system. The chip or chip system includes a processing circuitry configured to perform the methods described in an optional implementation of the above first aspect and an optional implementation of the above second aspect.

It may be understood that the terminal, the network device, the communication system, the storage medium, the program product, the computer program, and the chip or chip system which are mentioned above are all configured to execute the methods provided in the embodiments of the present disclosure. Therefore, regarding the beneficial effects they may achieve, reference may be made to the beneficial effects of the corresponding methods, which will not be repeated here.

The embodiments of the present disclosure are not exhaustive, but are merely illustrative of some embodiments, and are not intended to limit the scope of protection of the present disclosure. Unless there is any contradiction, each step in a particular embodiment may be implemented as an independent embodiment, and the steps may be arbitrarily combined. For example, the solution after removing some steps in a particular embodiment may also be implemented as an independent embodiment, and the order of the steps in a particular embodiment may be arbitrarily interchanged. In addition, optional implementations in a particular embodiment may be arbitrarily combined. Furthermore, the embodiments may be arbitrarily combined. For example, some or all steps in different embodiments may be arbitrarily combined, and a particular embodiment may be arbitrarily combined with optional implementations of other embodiments.

In each embodiment of the present disclosure, unless otherwise specified or contradicted by logic, the terms and/or descriptions between the embodiments are consistent and may be referenced by each other. The technical features in different embodiments may be combined based on their inherent logical relationships to form a new embodiment.

The terms used in the embodiments of the present disclosure are only for the purpose of describing specific embodiments and are not intended to limit the present disclosure.

In the embodiments of the present disclosure, unless otherwise specified, elements expressed in the singular form, such as "a," "an," "the," "above," "said," "above-mentioned," "this," or the like, may mean "one and only one," "one or more," "at least one," or the like. For example, when an article such as "a," "an," and "the" in English in translation is used, the noun following the article may be understood as a singular expression or a plural expression.

In the embodiments of the present disclosure, "a plurality of" refers to two or more.

In some embodiments, terms such as "at least one of," "one or more," "a plurality of," "multiple," and the like may be used interchangeably.

In some embodiments, the descriptions such as "at least one of A or B," "A and/or B," "A in one case, B in another case" or "in response to one case A, in response to another case B" may include the following technical solutions depending on the situations: A is executed in some embodiments (A is executed independently from B); B is executed in some embodiments (B is executed independently from A); A or B is selected for execution in some embodiments (A and B are selectively executed); and A and B are executed in some embodiments (A and B are both executed). The same applies when there are more branches such as A, B, and C.

In some embodiments, the descriptions such as "A or B" may include the following technical solutions depending on the situations: A is executed in some embodiments (A is executed independently from B); B is executed in some embodiments (B is executed independently from A); and A or B is selected for execution in some embodiments (A and B are selectively executed). The same applies when there are more branches such as A, B, and C.

The prefixes such as "first" and "second" in the embodiments of the present disclosure are only used to distinguish different described objects and do not constitute any restrictions on the position, order, priority, quantity or content of the described objects. For the statement of the described objects, reference is made to the description in the context of the claims or embodiments, and no unnecessary restrictions should be constituted due to the use of prefixes. For example, if the described object is a "field", the ordinal numbers preceding the "fields" in a "first field" and a "second field" do not limit the position or order of the "fields". "First" and "second" do not limit whether the "fields" they modify are in the same message, nor do they limit the order of the "first field" and "second field". For another example, if the described object is "level", then the ordinal numbers preceding the "levels" in a "first level" and a "second level" do not restrict the priority between "levels". For another example, the number of the described objects is not limited by ordinal numbers and may be one or more. Taking a "first device" as an example, the number of "devices" may be one or more. In addition, the objects modified by different prefixes may be the same or different. For example, if the described object is a "device", then the "first device" and the "second device" may be the same device or different devices, and the types of the "first device" and the "second device" may be the same or different; for another example, if the described object is "information", then "first information" and "second information" may be the same information or different information, and the contents of the "first information" and the "second information" may be the same or different.

In some embodiments, "including A," "comprising A," "indicating A," and "carrying A" may be interpreted as directly carrying A or indirectly indicating A.

In some embodiments, terms such as "in response to...," "in response to determining...," "in the case of...," "at the time of...," "when...," "if...," "in a case where...," and the like may be used interchangeably.

In some embodiments, terms such as "greater than," "greater than or equal to," "not less than," "more than," "more than or equal to," "not smaller than," "higher than," "higher than or equal to," "not lower than," and "above" may be used interchangeably; and terms such as "less than," "less than or equal to," "not greater than," "smaller than," "smaller than or equal to," "not more than," "lower than," "lower than or equal to," "not higher than," and "below" may be used interchangeably.

In some embodiments, apparatuses and devices may be interpreted as being physical or virtual, and their names are not limited to the names described in the embodiments. In some cases, apparatuses and devices may also be understood as "equipments," "devices," "circuits," "network elements," "nodes," "functions," "units," "sections," "systems," "networks," "chips," "chip systems," "entities," and "bodies".

In some embodiments, the "network" may be interpreted as devices included in the network, e.g., an access network device, a core network device, or the like.

In some embodiments, the "access network device (AN device)" may also be referred to as "a radio access network device (RAN device)," "a base station (BS)," "a radio base station," or "a fixed station". In some embodiments, the "access network device (AN device)" may also be understood as "a node," "an access point," "a transmission point (TP)," "a reception point (RP)," "a transmission/reception point (TRP)," "a panel," "an antenna panel," "an antenna array," "a cell," "a macro cell," "a small cell," "a femto cell," "a pico cell," "a sector," "a cell group," "a serving cell," "a carrier," "a component carrier," "a bandwidth part (BWP)", or the like.

In some embodiments, the "terminal" or "terminal device" may be referred to as a user equipment (UE), a user terminal, a mobile station (MS), a mobile terminal (MT), a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or the like.

In some embodiments, obtaining data, information, and the like may comply with the laws and regulations of the country where the data, information, and the like are obtained.

In some embodiments, data, information, and the like may be obtained with the consent of the user.

In addition, each element, each row, or each column in the table in the embodiments of the present disclosure may be implemented as an independent embodiment, and the combination of any elements, any rows, and any columns may also be implemented as an independent embodiment.

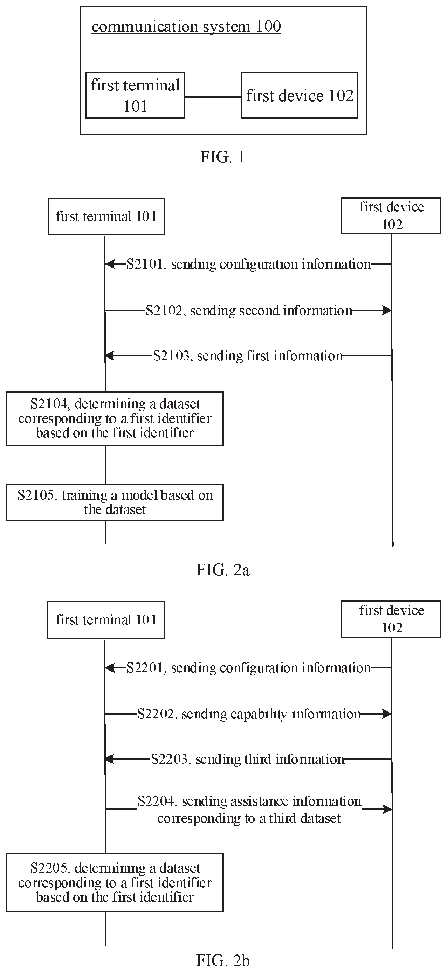

FIG. 1 is a schematic diagram illustrating the architecture of a communication system according to an embodiment of the present disclosure.

As shown in FIG. 1, the communication system 100 may include a first terminal 101 and a first device 102.

In some embodiments, for example, the first terminal 101 includes, but is not limited to, at least one of: a mobile phone, a wearable device, an Internet of Things device, a car with a communication function, a smart car, a tablet computer (Pad), a computer with a wireless transceiver function, a virtual reality (VR) terminal, an augmented reality (AR) terminal, a wireless terminal in industrial control, a wireless terminal in self-driving, a wireless terminal in a remote medical surgery, a wireless terminal in smart grid, a wireless terminal in transportation safety, a wireless terminal in a smart city, or a wireless terminal in a smart home.

In some embodiments, the first device 102 may be a network device, a second terminal, or a server. The second terminal refers to any terminal other than the first terminal 101, and the server may be a server from a terminal manufacturer or another server.

In some embodiments, when the first device 102 is a network device, the network device may include at least one of an access network device or a core network device.

In some embodiments, the access network device is, for example, a node or device that connects the terminal to a wireless network. The access network device may include, but is not limited to, at least one of: an evolved Node B (eNB), a next generation eNB (ng-eNB), a next generation Node B (gNB), a node B (NB), a home node B (HNB), a home evolved node B (HeNB), a wireless backhaul device, a radio network controller (RNC), a base station controller (BSC), a base transceiver station (BTS), a base band unit (BBU), or a mobile switching center in a 5G communication system; a base station, an open radio access network (Open RAN), or a cloud RAN (Cloud RAN) in a 6G communication system; base stations in other communication systems; or an access node in a wireless fidelity (Wi-Fi) system.

In some embodiments, the technical solutions in the present disclosure may be applied to the Open RAN architecture. In this case, the interfaces between or within access network devices involved in the embodiments of the present disclosure may be transformed into internal interfaces of the Open RAN architecture. The processes and information interactions between these internal interfaces may be implemented by software or programs.

In some embodiments, the access network device may be composed of a centralized unit (CU) and a distributed unit (DU), in which the CU may also be referred to as a control unit. The CU-DU structure may be used to split the protocol layers of the access network device, and the functions of some protocol layers are placed in the CU for centralized control, and the functions of some or all of the remaining protocol layers are distributed in the DU, and the DU is centrally controlled by the CU.

In some embodiments, the core network device may be a single device including one or more network elements, or may be multiple devices or a group of devices, each including all or some of one or more network elements. The network elements may be virtual or physical. The core network includes, for example, at least one of an evolved packet core (EPC), a 5G core network (5GCN), or a next generation core (NGC). Alternatively, the core network device may refer to a network element with a specific function, such as an access and mobility management function (AMF), a session management function (SMF), or the like.

It may be understood that the communication system described in the embodiments of the present disclosure is for the purpose of more clearly illustrating the technical solution in the embodiments of the present disclosure, but does not constitute a limitation on the technical solution provided in the embodiments of the present disclosure. Those of ordinary skill in the art may know that with the evolution of the system architecture and the emergence of new service scenarios, the technical solution provided in the embodiments of the present disclosure is also applicable to similar technical problems.

The following embodiments of the present disclosure may be applied to the communication system 100 shown in FIG. 1, or to some entities thereof, but are not limited thereto.

The entities shown in FIG. 1 are illustrative. The communication system 100 may include all or some of the entities in FIG. 1, or the communication system may include other entities outside in FIG. 1. The number and form of individual entities are arbitrary. The connection relationship between the entities is illustrative. The entities may not be connected to each other, or may be connected to each other in any way. The connection may be direct or indirect, and may be wired or wireless.

The embodiments of the present disclosure may be applied to Long Term Evolution (LTE) systems, LTE-Advanced (LTE-A) systems, LTE-Beyond (LTE-B) systems, SUPER 3G systems, International Mobile Telecommunications-Advanced (IMT-Advanced) systems, 4G mobile communication systems, 5G mobile communication systems, 5G new radio (NR) systems, Future Radio Access (FRA) systems, New-Radio Access Technology (RAT) systems, New Radio (NR) systems, New radio access (NX) systems, Future generation radio access (FX) systems, Global System for Mobile communications (GSM), CDMA2000, Ultra Mobile Broadband (UMB) systems, IEEE 802.11 (Wi-Fi), IEEE 802.16 (WiMAX), IEEE 802.20, Ultra-Wideband (UWB), Bluetooth (a registered trademark), PLMN networks, D2D systems, Machine-to-Machine (M2M) systems, IoT systems, V2X systems, systems utilizing other communication processing methods, next-generation systems built upon them, and the like. In addition, multiple systems may also be combined (for example, a combination of 5G and LTE or LTE-A, or the like) for application.

In the embodiments of the present disclosure, AI-based CSI processing is used as an example for illustration. In AI-based CSI compression, data from different configurations, scenarios, or sites may be distinguished. For AI-based CSI prediction, various types of data also need to be collected during the model training, inference, and monitoring phases. The manners or dimensions of data classification in AI-based CSI predictions need to be addressed.

FIG. 2a is a schematic interactive diagram illustrating a communication processing method according to an embodiment of the present disclosure. As shown in FIG. 2a, embodiments of the present disclosure relate to a communication processing method, which includes the following steps.

At step S2101, the first device 102 sends configuration information to the first terminal 101.

In some embodiments, the configuration information is used to configure assistance information, and the first device 102 in this step may be a network device.

Optionally, the configuration information is used to configure at least one of: contents or parameters included in the assistance information, or the value of at least one content or at least one parameter in the assistance information.

In some embodiments, different assistance information is associated with or corresponds to different datasets, that is, each dataset has the respective or associated assistance information. Each dataset has a corresponding first identifier, and the first identifier may be a dataset identifier (ID).

Optionally, the assistance information indicates feature information of the corresponding dataset.

Optionally, the dataset may be used for AI or ML-based predictions.

In some embodiments, the dataset includes at least one of: a CSI dataset, a beam identifier dataset, an RSRP dataset for beams, or a location information dataset.

The CSI dataset is used for AI or ML-based predictions, the beam identifier dataset is used for beam identifier predictions based on the AI or ML, the RSRP dataset is used for RSRP predictions for beams based on the AI or ML, and the location information dataset is used for location information predictions based on the AI or ML.

It is worth noting that the relevant implementations in the embodiments of the present disclosure are applicable to the predictions of any of the above information. The following embodiments will be illustratively described by taking a CSI prediction as an example.

In some embodiments, when the dataset is a CSI dataset, the dataset is used for at least one of an AI or ML-based CSI prediction model (hereinafter referred to as a model) training phase, a model inference phase, or a model monitoring phase.

Optionally, the AI-based CSI prediction process may include a model training process, a model inference process, and a model monitoring process. The AI or ML-based model may be configured on the first terminal 101 side. The first terminal 101 may obtain the prediction result by measuring a downlink reference signal such as a CSI-RS, preprocessing the measurement result CSI, and then inputting the preprocessed measurement result into the model.

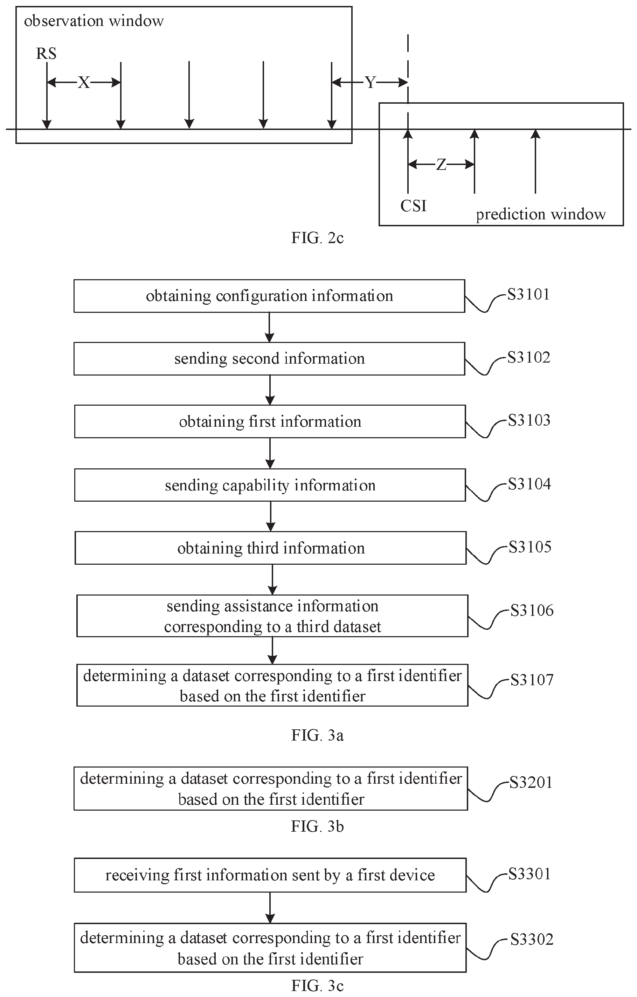

In one example, referring to FIG. 2c, different CSIs may be defined using an observation window and a prediction window. Within the observation window, the network device may send a CSI-RS, and the first terminal 101 obtains a CSI based on the measured CSI-RS, which is the measured CSI. Within the prediction window, the first terminal 101 obtains a CSI by a prediction based on the measured CSI, which is the predicted CSI. Understandably, the measured CSI may also be referred to as a historical CSI, and the predicted CSI may also be referred to as a future CSI. The predicted CSI may be obtained by predictions based on one or more measured CSIs.

Optionally, during the model training process, the first terminal 101 obtains multiple datasets (referred to as a sample set) for training. After obtaining the sample set, the first terminal 101 distinguishes between samples for the observation window and samples for the prediction window from the sample set, and uses the two types of samples to train the model until the model converges.

Optionally, during the model inference process, the first terminal 101 obtains the measured CSI, and inputs the measured CSI into the model to output the predicted CSI. Alternatively, the first terminal 101 obtains the measured CSI by measuring the CSI-RS, and inputs the measured CSI into the model to obtain the prediction result.

Optionally, during the model monitoring process, the first terminal 101 determines the true predicted CSI, and verifies the accuracy of the predicted CSI to determine whether the predicted CSI is suitable for the current channel.

Optionally, the measured CSI input to the model may be a CSI in the dataset, or a CSI obtained by measuring, by the first terminal 101, a downlink reference signal such as a CSI-RS, or may be a CSI obtained after preprocessing the above CSI.

In some embodiments, datasets need to be collected in all three CSI prediction processes described above.

In one example, the dataset includes one or more data, and the data is either a CSI-RS or a CSI when the dataset is a CSI dataset.

In this example, when the data is a CSI-RS, the CSI dataset may be a CSI obtained by performing, by the first terminal 101, a measurement.

In this example, when the data is a CSI, the CSI dataset may be a CSI obtained by the first terminal 101 without measurements.

In this example, the CSI is at least one of: channel matrix information, or channel feature vector information.

In some embodiments, the assistance information includes at least one of: a time interval between adjacent CSIs, a numeric count of CSIs, frequency domain characteristics, a moving speed, or a scenario.

Optionally, the time interval between adjacent CSIs includes at least one of: a time interval between adjacent measured CSIs in an observation window, a time interval between adjacent predicted CSIs in a prediction window, or a time interval between a first predicted CSI in a prediction window and a last measured CSI in an observation window, where the observation window is used to obtain the measured CSIs input to a model based on the AI or ML, and the prediction window is used to obtain the predicted CSIs output by the model.

Optionally, the numeric count of CSIs includes at least one of: a numeric count of the measured CSIs in the observation window, or a numeric count of the predicted CSIs in the prediction window.

In one example, referring to FIG. 2c, the observation window includes *M* measured CSIs, and the prediction window includes *N* predicted CSIs, where *M* and *N* are positive integers, respectively.

In this example, as shown in FIG. 2c, the time interval between adjacent measured CSIs in the observation window is *X,* the time interval between the first predicted CSI in the prediction window and the last measured CSI in the observation window is *Y*, and the time interval between adjacent predicted CSIs in the prediction window is *Z*, where *X, Y,* and *Z* are in time-domain units. The time-domain unit may be a time slot, a half-time slot, a sub-time slot, or a symbol. Taking the time slot as an example, the time interval may be the number of time slots at a certain subcarrier spacing (SCS).

In one example, the network device may configure a value of at least one of *X, Y,* or Z.

In another example, the first terminal 101 may determine *X* based on the period of the CSI-RS, and obtain the predicted CSI based on *X.*

Optionally, the frequency domain characteristics are frequency domain characteristics of a reference signal such as a CSI-RS, or frequency domain characteristics corresponding to the CSI. The frequency domain characteristics include, but are not limited to, carrier frequencies or bandwidths. For example, the CSI is channel status information of each of the 13 resource blocks (RBs) in the center carrier frequency of 2 GHz. The bandwidth corresponding to each RB is 180 kHz. For example, the frequency domain position of the CSI-RS configured by a base station is the bandwidth part 1 (BWP#1) for cell 1 (cell#1). The frequency domain characteristics of the CSI measured by the first terminal 101 based on the CSI-RS include the carrier frequency corresponding to cell#1, the bandwidth corresponding to BWP#1, and the frequency domain start and end positions.

Optionally, the moving speed may refer to the moving speed of the first terminal 101, or the moving speed may include the moving speeds of multiple different terminals (including the first terminal 101). Understandably, training a model based on a dataset with a certain moving speed to convergence may enable the model to have better processing effects on datasets with that moving speed.

Optionally, the scenario may include at least one of: an urban scenario, a rural scenario, an indoor scenario, or an outdoor scenario. The channel information complexity in the urban scenario is greater than that in the rural scenario, and the channel information complexity in the indoor scenario is greater than that in the outdoor scenario.

In some embodiments, taking the configuration of the assistance information via the configuration information as an example, the configuration information may include multiple pieces of information, each corresponding to a type of assistance information, and each indicating the specific value of the corresponding assistance information.

In one example, the configuration information includes two pieces of information, the first piece of information corresponds to the time interval between adjacent CSIs, and may indicate that the time interval between adjacent CSIs is 5 milliseconds; and the second piece of information corresponds to the number of CSIs in the observation window, and may indicate that the number of CSIs in the observation window is 5.

In some embodiments, during the model training phase, the assistance information may also include the number of CSIs in a set of CSIs.

Optionally, the set of CSIs may be CSIs from a single simulation (a drop).

Optionally, the set of CSIs may be CSIs at different moments from a terminal. During the model training process, the first *M* CSIs in this set may be used as measured CSIs, and the last *N* CSIs in this set may be used as predicted CSIs for model training.

Optionally, the set of CSIs corresponds to a single deployment. The deployment targets include at least one of: a terminal, a base station device, or a neutral site. The neutral site may be a third-party node other than the terminal, the base station device, and a server.

In some other embodiments, in addition to the assistance information configured by the network device, the assistance information may also be predefined. For example, when the first terminal 101 obtains the dataset for model training from the server, the assistance information for this dataset may be predefined.

In some embodiments, the first terminal 101 receives the configuration information.

At step S2102, the first terminal 101 sends second information to the first device 102.

In some embodiments, the second information indicates a first identifier corresponding to a second dataset requested by the first terminal 101.

In some embodiments, the first device 102 in this step may be one of: a network device, a second terminal, or a server.

In some embodiments, the second information may be request information, such as dataset request information.

Optionally, during the model training phase, the first terminal 101 obtains the dataset for model training from the first device 102. The first terminal 101 may request the relevant dataset from the first device 102 by sending the second information carrying the first identifier.

In some embodiments, during the model training phase, the first terminal 101 sends the second information.

In some embodiments, the first device 102 receives the second information.

At step S2103, the first device 102 sends the first information to the first terminal 101.

In some embodiments, the first device 102 may directly send the first information to the first terminal 101, the first information including a first dataset, and assistance information corresponding to the first dataset and/or a first identifier corresponding to the first dataset. At this point, the method may not include step S2102.

In some embodiments, the first device 102 may send the first information to the first terminal 101 according to the request by the first terminal 101, the first information including a second dataset and/or assistance information corresponding to the second dataset.

In some embodiments, the first terminal 101 receives the first information.

In some embodiments, during the model training phase, the first device 102 sends the first information to the first terminal 101.

At step S2104, the first terminal 101 determines a dataset corresponding to the first identifier based on the first identifier.

In some embodiments, the first terminal 101 may obtain a dataset from the first device 102, and may obtain classification or assistance information for the dataset based on the first identifier.

At step S2105, the first terminal 101 trains the model based on the dataset.

In some embodiments, the first terminal 101 trains the model based on a dataset with known features, so that the capabilities or applicable characteristics of the model may be defined after a converged model is obtained.

In some embodiments, the names of information and the like are not limited to the names described in the embodiments. Terms such as "information," "message," "signal," "signaling," "report," "configuration," "indication," "instruction," "command," "channel," "parameter," "domain," and "field" may be used interchangeably.

In some embodiments, "acquiring," "obtaining," "getting," "receiving," "transmitting," "bidirectional transmission," and "sending and/or receiving" may be used interchangeably, and may be interpreted as receiving from other entities, obtaining from protocols, obtaining from higher layers, obtaining by self-processing, autonomously implementing, or other meanings.

In some embodiments, terms such as "sending," "emitting," "reporting," "issuing," "transmitting," "bidirectional transmission," and "sending and/or receiving" may be used interchangeably.

In some embodiments, terms such as "uplink," "up-link," and "physical uplink" may be used interchangeably; terms such as "downlink," "down-link," and "physical downlink" may be used interchangeably; and terms such as "sidelink," "side-link," "sidelink communication," "side-link communication," "direct connection," "direct link," "direct communication," and "direct link communication" may be used interchangeably.

In some embodiments, terms such as "downlink control information (DCI)," "downlink (DL) assignment," "DL DCI," "uplink (UL) grant," and "UL DCI" may be used interchangeably.

In some embodiments, terms such as "physical downlink shared channel (PDSCH)" and "DL data" may be used interchangeably, and terms such as "physical uplink shared channel (PUSCH)" and "UL data" may be used interchangeably.

In some embodiments, the terms "component carrier (CC)," "cell," "frequency carrier," and "carrier frequency" may be used interchangeably.

In some embodiments, terms such as "certain," "preset," "predetermined," "set," "indicated," "particular," "any," and "first" may be used interchangeably. "A certain A," "a preset A," "a predetermined A," "a set A," "an indicated A," "a particular A," "any A," and "a first A" may be interpreted as A predefined in a protocol or the like, or as A obtained by setting, configuration, indication or the like, or as a specific A, a certain A, any A, a first A or the like, but are not limited thereto.

In some embodiments, determining or judging may be performed by a value represented by 1 bit (0 or 1), or by a true or false value (boolean), or by a comparison of numerical values (e.g., a comparison with a predetermined value), but is not limited thereto.

In some embodiments, "not expecting to receive" may be interpreted as not receiving on time domain resources and/or frequency domain resources, or as not performing subsequent processing on data after receiving it; and "not expecting to send" may be interpreted as not sending, or as sending but not expecting a receiver to respond to the sent content.

The communication processing method involved in the embodiments of the present disclosure may include at least one of steps S2101 to S2105. For example, step S2104 may be implemented as an independent embodiment, steps S2103 and S2104 may be implemented as an independent embodiment, steps S2102 to S2104 may be implemented as an independent embodiment, steps S2101 and S2104 may be implemented as an independent embodiment, and steps S2104 and S2105 may be implemented as an independent embodiment, but the communication processing method is not limited thereto.

In some embodiments, steps S2101, S2102, S2103, and S2105 are optional, and one or more of these steps may be omitted or substituted in different embodiments.

In some embodiments, reference may be made to other optional implementations described before or after the specification corresponding to FIG. 2a.

FIG. 2b is a schematic interactive diagram illustrating a communication processing method according to an embodiment of the present disclosure. As shown in FIG. 2b, embodiments of the present disclosure relate to a communication processing method, which includes the following steps.

At step S2201, the first device 102 sends configuration information to the first terminal 101.

In some embodiments, regarding the implementation of step S2201, reference may be made to the relevant implementation of step S2101 in FIG. 2a, which will not be repeated here.

At step S2202, the first terminal 101 sends capability information to the first device 102.

In some embodiments, the capability information includes assistance information corresponding to a third dataset to which a model is applicable, or a second identifier for the corresponding assistance information.

Optionally, the capability information may include part or all of the assistance information.

In some embodiments, during the model inference phase and/or the model monitoring phase, the first terminal 101 sends the capability information, such as a UE capability report.

In some embodiments, the second identifier includes at least one of: a first identifier (dataset ID) corresponding to the third dataset, an identifier (model ID) of the model, or a functionality identifier (functionality ID) of the model, where the identifier of the model and/or the functionality identifier of the model correspond(s) to the first identifier.

At step S2203, the first device 102 sends third information to the first terminal 101.

In some embodiments, the third information includes the first identifier corresponding to the third dataset, and the third information is used to request assistance information corresponding to the third dataset.

In some embodiments, the first device 102 may send the third information when the assistance information carried by the capability information lacks the required information.

In some embodiments, the first terminal 101 receives the third information.

At step S2204, the first terminal 101 sends the assistance information corresponding to the third dataset to the first device 102.

In some embodiments, the first terminal 101 may send assistance information to further send the information or content requested by the first device 102 in step S2203.

At step S2205, the first terminal 101 determines the dataset corresponding to the first identifier based on the first identifier.

In some embodiments, the first terminal 101 may obtain the classification of the dataset based on the first identifier.

In some embodiments, the first terminal 101 may determine a dataset corresponding to the assistance information based on a corresponding first identifier. Alternatively, the first terminal 101 obtains a dataset of predicted CSIs based on the measured CSIs.

In one example, the first identifier for dataset A is A, and the assistance information for the dataset A includes the number of CSIs in the prediction window and the moving speed of the first terminal 101. The first terminal 101 collects a set number of CSIs in the prediction window and data where the moving speed of the first terminal 101 conforms to a first range as the dataset A.

In some embodiments, the first terminal 101 may also send the third dataset to the first device 102. For example, during the model inference or monitoring phase, the first terminal 101 sends the third dataset and/or its assistance information to the first device 102.

Optionally, the third dataset may be a dataset for the model inference or monitoring phase. Based on the assistance information corresponding to the third dataset, the network device may know the relevant capabilities of the model on the first terminal 101 side, so as to make reasonable use of the model on the first terminal 101 side for CSI predictions.

The communication processing method involved in the embodiments of the present disclosure may include at least one of steps S2201 to S2205. For example, step S2205 may be implemented as an independent embodiment, steps S2202 and S2205 may be implemented as an independent embodiment, and steps S2203 to S2205 may be implemented as an independent embodiment, but the communication processing method is not limited thereto.

In some embodiments, steps S2201, S2202, S2203, and S2204 are optional, and one or more of these steps may be omitted or substituted in different embodiments.

In some embodiments, reference may be made to other optional implementations described before or after the specification corresponding to FIG. 2b.

FIG. 3a is a schematic diagram illustrating a communication processing method according to an embodiment of the present disclosure. As shown in FIG. 3a, embodiments of the present disclosure relate to a communication processing method, which is performed by the first terminal 101. The above-mentioned method includes the following steps.

At step S3101, the first terminal 101 obtains configuration information.

In some embodiments, regarding the implementation of step S3101, reference may be made to the relevant implementation of step S2101 in FIG. 2a, which will not be repeated here.

In some embodiments, the first terminal 101 may obtain the configuration information from a network device or other entities.

At step S3102, the first terminal 101 sends second information.

In some embodiments, regarding the implementation of step S3102, reference may be made to the relevant implementation of step S2102 in FIG. 2a, which will not be repeated here.

In some embodiments, the first terminal 101 may send the second information to a network device or other entities.

At step S3103, the first terminal 101 obtains first information.

In some embodiments, regarding the implementation of step S3103, reference may be made to the relevant implementation of step S2103 in FIG. 2a, which will not be repeated here.

In some embodiments, the first terminal 101 may obtain the first information from a network device or other entities.

At step S3104, the first terminal 101 sends capability information.

In some embodiments, regarding the implementation of step S3104, reference may be made to the relevant implementation of step S2202 in FIG. 2b, which will not be repeated here.

In some embodiments, the first terminal 101 may send the capability information to a network device or other entities.

At step S3105, the first terminal 101 obtains third information.

In some embodiments, regarding the implementation of step S3105, reference may be made to the relevant implementation of step S2203 in FIG. 2b, which will not be repeated here.

In some embodiments, the first terminal 101 may obtain the third information from a network device or other entities.

At step S3106, the first terminal 101 sends assistance information corresponding to a third dataset.

In some embodiments, regarding the implementation of step S3106, reference may be made to the relevant implementation of step S2204 in FIG. 2b, which will not be repeated here.

In some embodiments, the first terminal 101 may send the assistance information to a network device or other entities.

At step S3107, the first terminal 101 determines the dataset corresponding to the first identifier based on the first identifier.

In some embodiments, regarding the implementation of step S3107, reference may be made to the relevant implementation of step S2104 in FIG. 2a and the relevant implementation of step S2205 in FIG. 2b, which will not be repeated here.

In some embodiments, reference may be made to other optional implementations described before or after the specification corresponding to FIG. 3a.

FIG. 3b is a schematic diagram illustrating a communication processing method according to an embodiment of the present disclosure. As shown in FIG. 3b, embodiments of the present disclosure relate to a communication processing method, which is performed by the first terminal 101. The above-mentioned method includes the following steps.

At step S3201, the first terminal 101 determines a dataset corresponding to a first identifier based on the first identifier.

In some embodiments, regarding the implementation of step S3201, reference may be made to the relevant implementation of step S2104 in FIG. 2a and the relevant implementation of step S2205 in FIG. 2b, which will not be repeated here.

In some embodiments, assistance information may be configured by a network device, for example, the first terminal receives configuration information sent by the network device, and the configuration information is used to configure the assistance information.

In some embodiments, the assistance information is predefined.

In some embodiments, the dataset includes at least one of: a CSI dataset, a beam identifier dataset, an RSRP dataset for beams, or a location information dataset.

Optionally, the dataset is a CSI dataset, and the dataset is used for at least one of: an AI or ML-based CSI prediction model (hereinafter referred to as a model) training phase, a model inference phase, or a model monitoring phase.

In some embodiments, the assistance information includes at least one of: a time interval between adjacent CSIs, a numeric count of CSIs, frequency domain characteristics, a moving speed, or a scenario.

Optionally, the time interval between adjacent CSIs includes at least one of: a time interval between adjacent measured CSIs in an observation window, a time interval between adjacent predicted CSIs in a prediction window, or a time interval between a first predicted CSI in a prediction window and a last measured CSI in an observation window, where the observation window is used to obtain the measured CSIs input to a model based on the AI or ML, and the prediction window is used to obtain the predicted CSIs output by the model.

Optionally, the numeric count of CSIs includes at least one of: a numeric count of the measured CSIs in the observation window, or a numeric count of the predicted CSIs in the prediction window.

In some embodiments, the dataset includes one or more data, and the data is either a CSI-RS or a CSI when the dataset is a CSI dataset.

Optionally, the CSI is at least one of: channel matrix information, or channel feature vector information.

In some embodiments, reference may be made to other optional implementations described before or after the specification corresponding to FIG. 3b.

FIG. 3c is a schematic diagram illustrating a communication processing method according to an embodiment of the present disclosure. As shown in FIG. 3c, embodiments of the present disclosure relate to a communication processing method, which is performed by the first terminal 101. The above-mentioned method includes the following steps.

At step S3301, the first terminal 101 receives first information sent by the first device 102.

In some embodiments, regarding the implementation of step S3301, reference may be made to the relevant implementation of step S2103 in FIG. 2a, which will not be repeated here.

In some embodiments, the first information includes a first dataset, and assistance information corresponding to the first dataset and/or a first identifier corresponding to the first dataset.

In some embodiments, the first device is one of: a network device, a second terminal, or a server.

At step S3302, the first terminal 101 determines a dataset corresponding to a first identifier based on the first identifier.

In some embodiments, regarding the implementation of step S3202, reference may be made to the relevant implementation of step S2104 in FIG. 2a and the relevant implementation of step S2205 in FIG. 2b, which will not be repeated here.

In some embodiments, reference may be made to other optional implementations described before or after the specification corresponding to FIG. 3c.

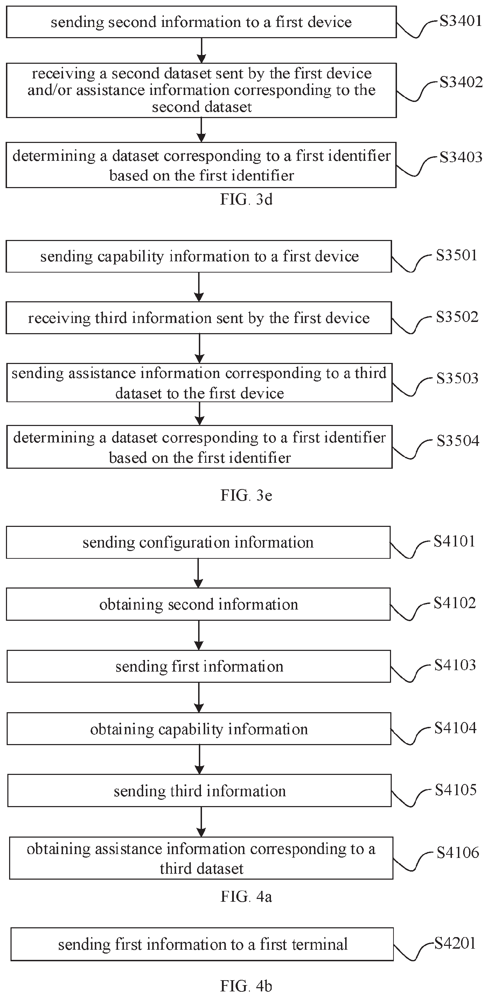

FIG. 3d is a schematic diagram illustrating a communication processing method according to an embodiment of the present disclosure. As shown in FIG. 3d, embodiments of the present disclosure relate to a communication processing method, which is performed by the first terminal 101. The above-mentioned method includes the following steps.

At step S3401, the first terminal 101 sends second information to the first device 102.

In some embodiments, regarding the implementation of step S3401, reference may be made to the relevant implementation of step S2102 in FIG. 2a, which will not be repeated here.

At step S3402, the first terminal 101 receives a second dataset sent by the first device 102 and/or assistance information corresponding to the second dataset.

In some embodiments, regarding the implementation of step S3402, reference may be made to the relevant implementation of step S2103 in FIG. 2a, which will not be repeated here.

At step S3403, the first terminal 101 determines a dataset corresponding to a first identifier based on the first identifier.

In some embodiments, regarding the implementation of step S3403, reference may be made to the relevant implementation of step S2104 in FIG. 2a and the relevant implementation of step S2205 in FIG. 2b, which will not be repeated here.

In some embodiments, reference may be made to other optional implementations described before or after the specification corresponding to FIG. 3d.

FIG. 3e is a schematic diagram illustrating a communication processing method according to an embodiment of the present disclosure. As shown in FIG. 3e, embodiments of the present disclosure relate to a communication processing method, which is performed by the first terminal 101. The above-mentioned method includes the following steps.

At step S3501, the first terminal 101 sends capability information to the first device 102.

In some embodiments, regarding the implementation of step S3501, reference may be made to the relevant implementation of step S2202 in FIG. 2b, which will not be repeated here.

In some embodiments, the second identifier includes at least one of: a first identifier corresponding to a third dataset, an identifier of a model, or a functionality identifier of a model, where the identifier of the model and/or the functionality identifier of the model correspond(s) to the first identifier.

At step S3502, the first terminal 101 receives third information sent by the first device 102.

In some embodiments, regarding the implementation of step S3502, reference may be made to the relevant implementation of step S2203 in FIG. 2b, which will not be repeated here.

At step S3503, the first terminal 101 sends assistance information corresponding to a third dataset to the first device 102.

In some embodiments, regarding the implementation of step S3503, reference may be made to the relevant implementation of step S2204 in FIG. 2b, which will not be repeated here.

At step S3504, the first terminal 101 determines a dataset corresponding to a first identifier based on the first identifier.

In some embodiments, regarding the implementation of step S3504, reference may be made to the relevant implementation of step S2205 in FIG. 2b, which will not be repeated here.

In some embodiments, reference may be made to other optional implementations described before or after the specification corresponding to FIG. 3e.

FIG. 4a is a schematic diagram illustrating a communication processing method according to an embodiment of the present disclosure. As shown in FIG. 4a, embodiments of the present disclosure relate to a communication processing method, which is performed by the first device 102. The above-mentioned method includes the following steps.

At step S4101, the first device 102 sends configuration information.

In some embodiments, regarding the implementation of step S4101, reference may be made to the relevant implementation of step S2101 in FIG. 2a, which will not be repeated here.

At step S4102, the first device 102 obtains second information.

In some embodiments, regarding the implementation of step S4102, reference may be made to the relevant implementation of step S2102 in FIG. 2a, which will not be repeated here.

At step S4103, the first device 102 sends first information.

In some embodiments, regarding the implementation of step S4103, reference may be made to the relevant implementation of step S2103 in FIG. 2a, which will not be repeated here.

At step S4104, the first device 102 obtains capability information.

In some embodiments, regarding the implementation of step S4104, reference may be made to the relevant implementation of step S2202 in FIG. 2b, which will not be repeated here.

At step S4105, the first device 102 sends third information.

In some embodiments, regarding the implementation of step S4105, reference may be made to the relevant implementation of step S2203 in FIG. 2b, which will not be repeated here.

At step S4106, the first device 102 obtains assistance information corresponding to a third dataset.

In some embodiments, regarding the implementation of step S4106, reference may be made to the relevant implementation of step S2204 in FIG. 2b, which will not be repeated here.

In some embodiments, reference may be made to other optional implementations described before or after the specification corresponding to FIG. 4a.

FIG. 4b is a schematic diagram illustrating a communication processing method according to an embodiment of the present disclosure. As shown in FIG. 4b, embodiments of the present disclosure relate to a communication processing method, which is performed by the first device 102. The above-mentioned method includes the following steps.

At step S4201, the first device 102 sends first information to the first terminal 101.

In some embodiments, regarding the implementation of step S4201, reference may be made to the relevant implementation of step S2103 in FIG. 2a, which will not be repeated here.

In some embodiments, the first terminal is configured to determine a dataset corresponding to a first identifier based on the first identifier, different datasets are associated with corresponding assistance information, and the assistance information indicates feature information corresponding to the dataset, and the dataset is used for an AI or ML-based prediction.

In some embodiments, the first device is one of: a network device, a second terminal, or a server.

In some embodiments, the first device may send configuration information to the first terminal, where the configuration information is used to configure the assistance information, and the first device is a network device. Alternatively, the assistance information is predefined.

In some embodiments, the dataset includes at least one of: a CSI dataset, a beam identifier dataset, an RSRP dataset for beams, or a location information dataset.

Optionally, the dataset is a CSI dataset, and the dataset is used for at least one of: an AI or ML-based CSI prediction model (hereinafter referred to as a model) training phase, a model inference phase, or a model monitoring phase.

In some embodiments, the assistance information includes at least one of: a time interval between adjacent CSIs, a numeric count of CSIs, frequency domain characteristics, a moving speed, or a scenario.

Optionally, the time interval between adjacent CSIs includes at least one of: a time interval between adjacent measured CSIs in an observation window, a time interval between adjacent predicted CSIs in a prediction window, or a time interval between a first predicted CSI in a prediction window and a last measured CSI in an observation window, where the observation window is used to obtain the measured CSIs input to a model based on the AI or ML, and the prediction window is used to obtain the predicted CSIs output by the model.

Optionally, the numeric count of CSIs includes at least one of: a numeric count of the measured CSIs in the observation window, or a numeric count of the predicted CSIs in the prediction window.

In some embodiments, the dataset includes one or more data; and when the dataset is a CSI dataset, the data is either a CSI-RS or a CSI.

Optionally, the CSI is at least one of: channel matrix information, or channel feature vector information.

In some embodiments, reference may be made to other optional implementations described before or after the specification corresponding to FIG. 4b.

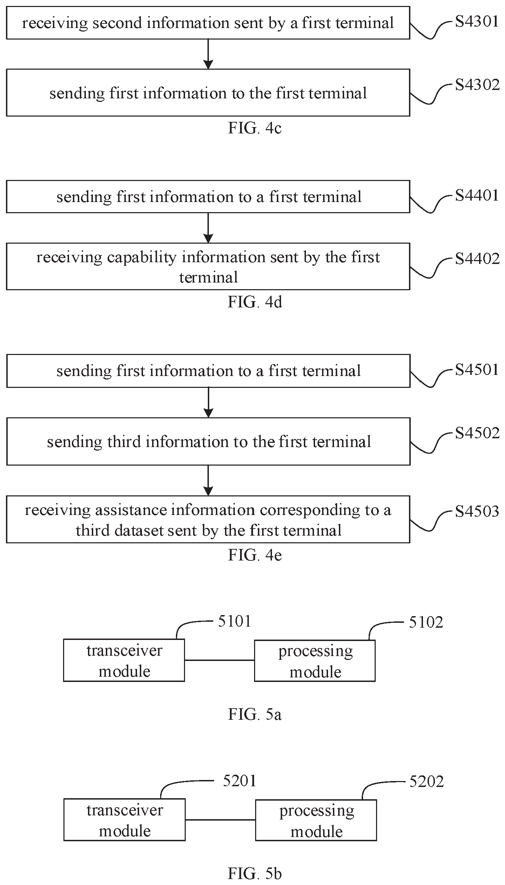

FIG. 4c is a schematic diagram illustrating a communication processing method according to an embodiment of the present disclosure. As shown in FIG. 4c, embodiments of the present disclosure relate to a communication processing method, which is performed by the first device 102. The above-mentioned method includes the following steps.

At step S4301, the first device 102 receives second information sent by the first terminal 101.

In some embodiments, regarding the implementation of step S4301, reference may be made to the relevant implementation of step S2102 in FIG. 2a, which will not be repeated here.

At step S4302, the first device 102 sends first information to the first terminal 101.

In some embodiments, regarding the implementation of step S4302, reference may be made to the relevant implementation of step S2103 in FIG. 2a, which will not be repeated here.

The first information includes a second dataset and/or assistance information corresponding to the second dataset.

In some embodiments, reference may be made to other optional implementations described before or after the specification corresponding to FIG. 4c.

FIG. 4d is a schematic diagram illustrating a communication processing method according to an embodiment of the present disclosure. As shown in FIG. 4d, embodiments of the present disclosure relate to a communication processing method, which is performed by the first device 102. The above-mentioned method includes the following steps.

At step S4401, the first device 102 sends first information to the first terminal 101.

In some embodiments, regarding the implementation of step S4401, reference may be made to the relevant implementation of step S2103 in FIG. 2a, which will not be repeated here.

At step S4402, the first device 102 receives capability information sent by the first terminal 101.

In some embodiments, regarding the implementation of step S4401, reference may be made to the relevant implementation of step S2202 in FIG. 2b, which will not be repeated here.

In some embodiments, the second identifier includes at least one of: a first identifier corresponding to a third dataset, an identifier of a model, or a functionality identifier of a model, where the identifier of the model and/or the functionality identifier of the model correspond(s) to the first identifier.

In some embodiments, reference may be made to other optional implementations described before or after the specification corresponding to FIG. 4d.

FIG. 4e is a schematic diagram illustrating a communication processing method according to an embodiment of the present disclosure. As shown in FIG. 4e, embodiments of the present disclosure relate to a communication processing method, which is performed by the first device 102. The above-mentioned method includes the following steps.

At step S4501, the first device 102 sends first information to the first terminal 101.

In some embodiments, regarding the implementation of step S4501, reference may be made to the relevant implementation of step S2103 in FIG. 2a, which will not be repeated here.

At step S4502, the first device 102 sends third information to the first terminal 101.

In some embodiments, regarding the implementation of step S4502, reference may be made to the relevant implementation of step S2203 in FIG. 2b, which will not be repeated here.

At step S4503, the first device 102 receives assistance information corresponding to a third dataset sent by the first terminal 101.

In some embodiments, regarding the implementation of step S4503, reference may be made to the relevant implementation of step S2204 in FIG. 2b, which will not be repeated here.

In some embodiments, reference may be made to other optional implementations described before or after the specification corresponding to FIG. 4e.

To facilitate the understanding of the embodiments of the present disclosure, some specific examples are listed below.

### Example 1

For datasets used for AI-based CSI predictions, different datasets are distinguished by IDs.

Optionally, each dataset is defined using assistance information.

Optionally, the definition of the assistance information for the dataset may be either network-configured or predefined.

Optionally, the assistance information includes at least one of: a time interval between samples, such as the number of slots at a certain SCS; the number of samples in a set, which may be all samples from a single UE in a drop; the predicted period/cycle; the distance between a start prediction point and a last observation point; the number of predictions; frequency characteristics, such as carrier frequencies and bandwidths; user speeds; or a scenario.

### Example 2

During the model training phase, if the UE obtains the dataset for model training from other entities, the interaction of the dataset may be involved. These other entities may be servers, gNBs, other UEs, or the like.

Mode 1: when an entity transmits data to a UE, it transmits assistance information corresponding to a dataset, such as a dataset identifier, while transmitting the dataset.

Mode 2: the UE sends a dataset request to the entity, the dataset request including the dataset identifier.

Alternatively, if the entity is a gNB or a UE, the assistance information for the dataset is configured by a network device, e.g., via a radio resource control (RRC) signaling.

Optionally, if the entity is a server, the assistance information for the dataset is predefined.

### Example 3

During the model inference or monitoring phase, assistance information for at least a portion of the dataset used in the model inference or monitoring phase may be reported via a capability report.

Optionally, in the capability report, a UE may directly report a dataset identifier (dataset ID). Alternatively, the UE may also report a model ID and/or a functionality ID, in which case the model ID and/or the functionality ID correspond(s) to the dataset ID.

Optionally, for the content not included in the dataset ID, the base station may request the terminal to report it.

The embodiments of the present disclosure further provide a device for implementing any one of the above methods. For example, a device is provided, which includes units or modules for implementing steps performed by the terminal in any one of the above methods. For another example, another device is provided, which includes units or modules for implementing steps performed by a network device (such as an access network device, a core network functional node, a core network device, or the like) in any one of the above methods.

It should be understood that the division of the units or modules in the above device is only a logical functional division. In actual implementation, the units or modules may be fully or partially integrated into a physical entity, or may be physically separated. Furthermore, the units or modules in the device may be implemented in the form of calling software by a processor, for example, the device includes a processor, the processor is connected to a memory, the memory has stored therein instructions, and the processor calls the instructions stored in the memory to implement any one of the above methods or to implement the functions of the units or modules of the above device. The processor is, for example, a general-purpose processor, such as a central processing unit (CPU) or a microprocessor, and the memory is either internal to the device or external to the device. Alternatively, the units or modules in the device may be implemented in the form of hardware circuits. The functions of some or all of the units or modules may be achieved by designing the hardware circuits. The above-mentioned hardware circuits may be understood as one or more processors. For example, in an implementation, the above-mentioned hardware circuit is an application-specific integrated circuit (ASIC). The functions of some or all of the above-mentioned units or modules are achieved by designing the logical relationships between the components within the circuit. As another example, in another implementation, the above-mentioned hardware circuit may be implemented by a programmable logic device (PLD). Taking a field programmable gate array (FPGA) as an example, it may include a large number of logic gates. The connection relationships between the logic gates are configured via configuration files, thereby achieving the functions of some or all of the above-mentioned units or modules. All units or modules of the above device may be implemented entirely in the form of calling software by the processor, or entirely by hardware circuits, or partially in the form of calling software by the processor and the rest by hardware circuits.

In the embodiments of the present disclosure, the processor is a circuit with signal processing functions. In an implementation, the processor may be a circuit with instruction reading and running functions, such as a CPU, a microprocessor, a graphics processing unit (GPU) (which may be understood as a microprocessor), or a digital signal processor (DSP). In another implementation, the processor may implement certain functions by means of the logical relationship of hardware circuits. The logical relationship of the above-mentioned hardware circuits is fixed or reconfigurable. For example, the processor is a hardware circuit implemented by an ASIC or a PLD, such as an FPGA. In a reconfigurable hardware circuit, the process of loading, by the processor, a configuration document to implement the hardware circuit configuration may be understood as the process of loading, by the processor, instructions to implement the functions of some or all of the above units or modules. In addition, the processor is may also be a hardware circuit designed for artificial intelligence, which may be understood as ASIC, such as a neural network processing unit (NPU), a tensor processing unit (TPU), a deep learning processing unit (DPU), or the like.

FIG. 5a is a schematic block diagram of the terminal 101 provided in an embodiment of the present disclosure. As shown in FIG. 5a, the terminal 5100 may include at least one of a transceiver module 5101, a processing module 5102, or the like. In some embodiments, the above-mentioned transceiver module 5101 is configured to determine a dataset corresponding to a first identifier based on the first identifier, different datasets being associated with corresponding assistance information, where the assistance information indicates feature information corresponding to the dataset, and the dataset is used for an AI or ML-based prediction.

Optionally, the above-mentioned transceiver module 5101 is configured to perform at least one of the communication steps such as sending and/or receiving steps performed by the terminal 101 in any of the above methods. Optionally, the above-mentioned processing module 5102 is configured to perform at least one of the other steps performed by the terminal 101 in any of the above methods.

FIG. 5b is a schematic block diagram of the first device 102 provided in an embodiment of the present disclosure. As shown in FIG. 5b, the first device 5200 may include at least one of a transceiver module 5201, a processing module 5202, or the like. In some embodiments, the above-mentioned transceiver module 5201 is configured to send first information to a first terminal, the first information including a first dataset, and assistance information corresponding to the first dataset and/or a first identifier corresponding to the first dataset, where the first terminal is configured to determine a dataset corresponding to the first identifier based on the first identifier, different datasets are associated with corresponding assistance information, and the assistance information indicates feature information corresponding to the dataset, and the dataset is used for an AI or ML-based prediction.

Optionally, the above-mentioned transceiver module 5201 is configured to perform at least one of the communication steps such as sending and/or receiving steps performed by the first device 102 in any of the above methods. Optionally, the above-mentioned processing module 5202 is configured to perform at least one of the other steps performed by the first device 102 in any of the above methods.

In some embodiments, the transceiver module may include a sending module and/or a receiving module, and the sending module and the receiving module may be separate or integrated together. Alternatively, the transceiver module may be interchanged with the transceiver.

In some embodiments, the processing module may be a single module or may include multiple sub-modules. Optionally, the above-mentioned sub-modules may each execute all or some of the steps to be performed by the processing module. Alternatively, the processing module may be interchanged with the processor.

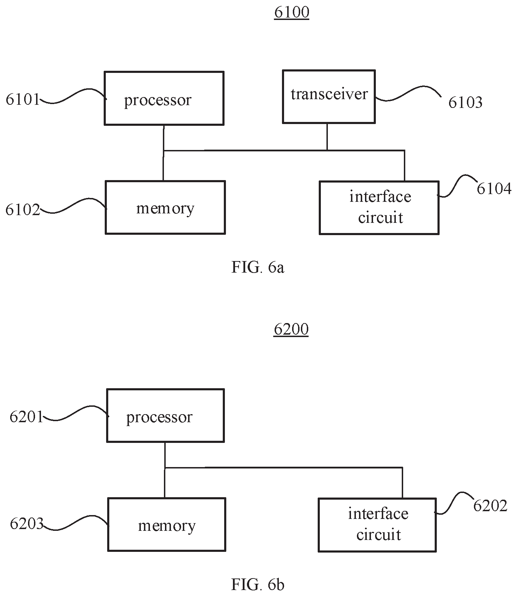

FIG. 6a is a schematic block diagram of a communication device 6100 provided in an embodiment of the present disclosure. The communication device 6100 may be a network device (such as an access network device, a core network device, or the like), a terminal (such as a user equipment, or the like), a chip, chip system, or processor that supports a network device to implement any one of the above methods, or a chip, chip system, or processor that supports a terminal to implement any one of the above methods. The communication device 6100 may be configured to implement the methods as described in the above-mentioned method embodiments. For details, reference may be made to the description in the above-mentioned method embodiments.

As shown in FIG. 6a, the communication device 6100 includes one or more processors 6101. The processor 6101 may be a general-purpose processor, a special-purpose processor, or the like. The processor 6101 may be, for example, a baseband processor or a central processor. The baseband processor may be configured to process a communication protocol and communication data, and the central processor may be configured to control a communication device (such as a base station, a baseband chip, a terminal, a terminal chip, a distributed unit (DU), a centralized unit (CU), or the like), execute a program, and process data of the program. The communication device 6100 is configured to execute any one of the above methods.

In some embodiments, the communication device 6100 further includes one or more memories 6102 for storing instructions. Alternatively, all or some of the memories 6102 may be located outside the communication device 6100.

In some embodiments, the communication device 6100 further includes one or more transceivers 6103. When the communication device 6100 includes one or more transceivers 6103, at least one of the communication steps such as sending and/or receiving steps (for example, but not limited to, steps S2101 and S2102) in the above methods is performed by the transceiver 6103, and at least one of the other steps (for example, but not limited to, steps S2103, S2104 and S2105) is performed by the processor 6101.

In some embodiments, the transceiver may include a receiver and/or a transmitter, and the receiver and the transmitter may be separate or integrated. Optionally, terms such as transceiver, transceiver unit, transceiver device, and transceiver circuit may be used interchangeably; terms such as transmitter, transmitter unit, transmitter device, and transmitter circuit may be used interchangeably; and terms such as receiver, receiver unit, receiver device, and receiver circuit may be used interchangeably.

In some embodiments, the communication device 6100 may include one or more interface circuits 6104. Optionally, the interface circuits 6104 are connected to the memory 6102. The interface circuits 6104 may be configured to receive signals from the memory 6102 or other devices, and may be configured to send signals to the memory 6102 or other devices. For example, the interface circuits 6104 may read instructions stored in the memory 6102 and send the instructions to the processor 6101.

The communication device 6100 described in the above embodiments may be a network device or a terminal, but the scope of the communication device 6100 described in the present disclosure is not limited thereto, and the structure of the communication device 6100 may not be limited to FIG. 6a. The communication device 6100 may be a standalone device or part of a larger device. For example, the communication device 6100 may be (1) a stand-alone integrated circuit (IC), or a chip, or a chip system or subsystem; (2) a set of one or more ICs, in which optionally, the set of ICs may further include a storage component for storing data and programs; (3) an ASIC, such as a modem; (4) a module that may be embedded in other devices; (5) a receiver, a terminal, an intelligent terminal, a cellular phone, a wireless device, a handheld device, a mobile unit, an in-vehicle device, a network device, a cloud device, an artificial intelligence device, or the like; or (6) others.

FIG. 6b is a schematic block diagram of a chip 6200 provided in an embodiment of the present disclosure. For the case where the communication device 6100 may be a chip or a chip system, reference may be made to the block diagram of the chip 6200 shown in FIG. 6b, but the present disclosure is not limited thereto.

The chip 6200 includes one or more processors 6201, and the chip 6200 is configured to perform any one of the above methods.

In some embodiments, the chip 6200 further includes one or more interface circuits 6202. Optionally, the interface circuits 6202 are connected to the memory 6203. The interface circuits 6202 may be configured to receive signals from the memory 6203 or other devices, and may be configured to send signals to the memory 6203 or other devices. For example, the interface circuits 6202 may read instructions stored in the memory 6203 and send the instructions to the processor 6201.

In some embodiments, at least one of the communication steps such as sending and/or receiving steps (for example, but not limited to, steps S2101 and S2102) in the above methods is performed by the interface circuits 6202, and at least one of the other steps (for example, but not limited to, steps S2103, S2104 and S2105) is performed by the processor 6201.

In some embodiments, terms such as interface circuit, interface, transceiver pin, and transceiver may be used interchangeably.

In some embodiments, the chip 6200 further includes one or more memories 6203 for storing instructions. Alternatively, all or some of the memories 6203 may be located outside the chip 6200.

The present disclosure further provides a storage medium, which has stored therein instructions that, when executed on the communication device 6100, cause the communication device 6100 to perform any one of the above methods. Optionally, the above-mentioned storage medium is an electronic storage medium. Optionally, the above-mentioned storage medium is a computer-readable storage medium, but is not limited thereto; and the above-mentioned storage medium may also be a storage medium readable by other devices. Optionally, the above storage medium may be a non-transitory storage medium, but is not limited thereto; and the above-mentioned storage medium may also be a transitory storage medium.

The present disclosure further provides a program product that, when executed by the communication device 6100, causes the communication device 6100 to perform any one of the above methods. Optionally, the above-mentioned program product is a computer program product.

The present disclosure further provides a computer program that, when executed on a computer, causes the computer to perform functions of any one of the above-mentioned method embodiments.

### Industrial Applicability

In the method in the present disclosure, datasets in AI or ML-based predictions may be classified using a first identifier, and the feature information of the dataset may be referenced to combine the characteristics or uses of the dataset in the classification, which is conducive to improving the rationality and efficiency of dataset collection and application.

## Claims

1. A communication processing method, comprising:
determining, by a first terminal, a dataset corresponding to a first identifier based on the first identifier, different datasets being associated with corresponding assistance information,
wherein the assistance information indicates feature information corresponding to the dataset, and the dataset is used for a prediction based on artificial intelligence (AI) or machine learning (ML).

2. The method according to claim 1, further comprising:
receiving, by the first terminal, first information sent by a first device, the first information comprising a first dataset, and the assistance information corresponding to the first dataset and/or the first identifier corresponding to the first dataset.

3. The method according to claim 1, further comprising:
sending, by the first terminal, second information to a first device, the second information indicating a first identifier corresponding to a second dataset requested by the first terminal;
receiving, by the first terminal, the second dataset sent by the first device and/or the assistance information corresponding to the second dataset.

4. The method according to claim 1, further comprising:
sending, by the first terminal, capability information to a first device, the capability information comprising assistance information corresponding to a third dataset to which a model is applicable, or a second identifier for the corresponding assistance information.

5. The method according to claim 4, wherein the second identifier comprises at least one of:
the first identifier corresponding to the third dataset;
an identifier of the model; or
a functionality identifier of the model,
wherein the identifier of the model and/or the functionality identifier of the model correspond(s) to the first identifier.

6. The method according to claim 4, further comprising:
receiving, by the first terminal, third information sent by the first device, the third information comprising a first identifier corresponding to the third dataset, the third information being used to request assistance information corresponding to the third dataset;
sending, by the first terminal, the assistance information corresponding to the third dataset to the first device.

7. The method according to any one of claims 2 to 6, wherein the first device is one of:
a network device;
a second terminal; or
a server.

8. The method according to any one of claims 1 to 6, further comprising:
receiving, by the first terminal, configuration information sent by a first device, the configuration information being used to configure the assistance information, wherein the first device is a network device.

9. The method according to any one of claims 1 to 7, wherein the assistance information is predefined.

10. The method according to any one of claims 1 to 9, wherein the dataset comprises at least one of:
a channel status information (CSI) dataset;
a beam identifier dataset;
a reference signal received power (RSRP) dataset for beams; or
a location information dataset.

11. The method according to claim 10, wherein the dataset is a CSI dataset, and the dataset is used for at least one of a model training phase, a model inference phase, and a model monitoring phase of an AI or ML-based CSI prediction.

12. The method according to claim 10 or 11, wherein the assistance information comprises at least one of:
a time interval between adjacent CSIs;
a numeric count of CSIs;
frequency domain characteristics;
a moving speed; or
a scenario.

13. The method according to claim 12, wherein the time interval between adjacent CSIs comprises at least one of:
a time interval between adjacent measured CSIs in an observation window;
a time interval between adjacent predicted CSIs in a prediction window; or
a time interval between a first predicted CSI in a prediction window and a last measured CSI in an observation window,
wherein the observation window is used to obtain the measured CSIs input to a model based on the AI or ML, and the prediction window is used to obtain the predicted CSIs output by the model.

14. The method according to claim 12, wherein the numeric count of CSIs comprises at least one of:
a numeric count of the measured CSIs in the observation window; or
a numeric count of the predicted CSIs in the prediction window.

15. The method according to any one of claims 1 to 14, wherein the dataset comprises one or more data; and in a case where the dataset is a CSI dataset, the data is a channel status information-reference signal (CSI-RS) or a CSI.

16. The method according to claim 15, wherein the CSI is at least one of:
channel matrix information; or
channel feature vector information.

17. A communication processing method, comprising:
sending, by a first device, first information to a first terminal, the first information comprising a first dataset, and assistance information corresponding to the first dataset and/or a first identifier corresponding to the first dataset,
wherein the first terminal is configured to determine a dataset corresponding to the first identifier based on the first identifier, different datasets are associated with corresponding assistance information, and the assistance information indicates feature information corresponding to the dataset, and the dataset is used for a prediction based on artificial intelligence (AI) or machine learning (ML).

18. The method according to claim 17, further comprising:
receiving, by the first device, second information sent by the first terminal, the second information indicating a first identifier corresponding to a second dataset requested by the first terminal;
sending, by the first device, the second dataset and/or the assistance information corresponding to the second dataset to the first terminal.

19. The method according to claim 17, further comprising:
receiving, by the first device, capability information sent by the first terminal, the capability information comprising assistance information corresponding to a third dataset to which a model is applicable, or a second identifier for the corresponding assistance information.

20. The method according to claim 19, wherein the second identifier comprises at least one of:
the first identifier corresponding to the third dataset;
an identifier of the model; or
a functionality identifier of the model,
wherein the identifier of the model and/or the functionality identifier of the model correspond(s) to the first identifier.

21. The method according to claim 19, further comprising:
sending, by the first device, third information to the first terminal, the third information comprising a first identifier corresponding to the third dataset, the third information being used to request assistance information corresponding to the third dataset;
receiving, by the first device, the assistance information corresponding to the third dataset sent by the first terminal.

22. The method according to any one of claims 17 to 21, wherein the first device is one of:
a network device;
a second terminal; or
a server.

23. The method according to any one of claims 17 to 21, further comprising:
sending, by the first device, configuration information to the first terminal, wherein the configuration information is used to configure the assistance information, and the first device is a network device.

24. The method according to any one of claims 17 to 23, wherein the dataset comprises at least one of:
a channel status information (CSI) dataset;
a beam identifier dataset;
a reference signal received power (RSRP) dataset for beams; or
a location information dataset.

25. The method according to claim 24, wherein the dataset is a CSI dataset, and the dataset is used for at least one of a model training phase, a model inference phase, or a model monitoring phase of an AI or ML-based CSI prediction.

26. The method according to any one of claims 17 to 23, wherein the assistance information comprises at least one of:
a time interval between adjacent CSIs;
a numeric count of CSIs;
frequency domain characteristics;
a moving speed; or
a scenario.

27. The method according to claim 26, wherein the time interval between adjacent CSIs comprises at least one of:
a time interval between adjacent measured CSIs in an observation window;
a time interval between adjacent predicted CSIs in a prediction window; or
a time interval between a first predicted CSI in a prediction window and a last measured CSI in an observation window,
wherein the observation window is used to obtain the measured CSIs input to a model based on the AI or ML, and the prediction window is used to obtain the predicted CSIs output by the model.

28. The method according to claim 26, wherein the numeric count of CSIs comprises at least one of:
a numeric count of the measured CSIs in the observation window; or
a numeric count of the predicted CSIs in the prediction window.

29. The method according to any one of claims 17 to 28, wherein the dataset comprises one or more data; and in a case where the dataset is a CSI dataset, the data is a channel status information-reference signal (CSI-RS) or a CSI.

30. The method according to claim 29, wherein the CSI is at least one of:
channel matrix information; or
channel feature vector information.

31. A terminal, comprising:
a transceiver module configured to determine a dataset corresponding to a first identifier based on the first identifier, different datasets being associated with corresponding assistance information,
wherein the assistance information indicates feature information corresponding to the dataset, and the dataset is used for a prediction based on artificial intelligence (AI) or machine learning (ML).

32. A device, comprising:
a transceiver module configured to send first information to a first terminal, the first information comprising a first dataset, and assistance information corresponding to the first dataset and/or a first identifier corresponding to the first dataset,
wherein the first terminal is configured to determine a dataset corresponding to the first identifier based on the first identifier, different datasets are associated with corresponding assistance information, and the assistance information indicates feature information corresponding to the dataset, and the dataset is used for a prediction based on artificial intelligence (AI) or machine learning (ML).

33. A terminal, comprising:
one or more processors,
wherein the terminal is configured to perform the method according to any one of claims 1 to 16.

34. A device, comprising:
one or more processors,
wherein the device is configured to perform the method according to any one of claims 17 to 30.

35. A communication system, comprising:
a first terminal configured to perform the method according to any one of claims 1 to 16; and
a first device configured to perform the method according to any one of claims 17 to 30.

36. A storage medium having stored therein instructions that, when run on a communication device, cause the communication device to perform the method according to any one of claims 1 to 16 or any one of claims 17 to 30.
